Europäisches Patentamt

European Patent Office

Office européen des brevets

(11) Publication number: **0 103 160**
A1

(12) # EUROPEAN PATENT APPLICATION

(21) Application number: 83107848.0

(22) Date of filing: 09.08.83

(51) Int. Cl.³: **C 10 G 69/04,** C 10 G 11/05
// B01J29/08, B01J29/38

(30) Priority: 02.09.82 US 413870

(43) Date of publication of application: 21.03.84
Bulletin 84/12

(84) Designated Contracting States: **AT BE DE FR GB IT NL
SE**

(71) Applicant: ASHLAND OIL, INC., R.C. Willson, Jr. P.O.
Box 391, BL-5, Ashland Kentucky 41114 (US)

(72) Inventor: Miller, Charles B., 220 Bellefonte Circle,
Ashland Kentucky 41101 (US)
Inventor: Whitt, Roy E., Route 7 P.O. Box 244F, Ashland
Kentucky 41101 (US)

(74) Representative: Staub, Gabriella, Dr.-Ing. et al, c/o
Staub & Olcott Baaderstrasse 3, D-8000 Munich 5 (DE)

(54) Catalytic upgrading of reduced crudes and residual oils with a coke selective catalyst.

(57) The present invention is concerned with upgrading residual oils to gasoline product with a coke selective hydrogen stable faujasite crystalline zeolite catalyst comprising at least 40 weight percent of alumina and rare earth metals in an acidic matrix and effecting regeneration thereof in an oxygen lean atmosphere under CO combustion conditions. A compounds of antimony is added to passivate metal contaminants. The regeneration of the catalyst is effected to retain up to 0.25 weight percent carbon and heat balance of the operation is limited as a function of metal promoted CO burn within a dense fluid bed of catalyst being regenerated.

EP 0 103 160 A1

CATALYTIC UPGRADING OF REDUCED CRUDES & RESIDUAL
OILS WITH A COKE SELECTIVE CATALYST

## Background of the Invention

It is recognized at this stage of the petroleum refining industry that heavy oils such as residual portions of crude oils and reduced crudes boiling above 343.3°C (650°F) comprising Conradson carbon producing components including asphaltenes and porphyrins boiling above about 551.6°C (1025°F) are less than desirable charge stocks in a normal gas oil catalytic cracking operation because the Conradson carbon producing components and metal contaminants rapidly reduce the catalyst cracking activity and selectivity as well as cause undesired yields of dry gas and coke at the expense of desired gasoline boiling range products.

Crude oils comprising metallo-organic compounds are known in which from 30 to 60 percent or more by volume comprise compounds boiling above about 343.3°C (650°F) with from about 10 to 30 volume percent of the total crude volume comprising compounds boiling above about 551.6°C or 565.5°C (1025°F or 1050°F) at atmospheric pressure. Because of the scarcity of high quality gas oils boiling in the range of 343.3°C (650°F) up to about 551.6°C (1025°F), it is now necessary to develop economical and efficient processes for converting residual oils, reduced crudes and more of the crude barrel to desired products of gasoline, gasoline precursors and light fuel oils.

It is also important economically to be able to employ existing processing equipment such as gas oil fluid catalytic cracking processing equipment for

RI-6181A

converting the less desirable residual oil feed stocks in the absence of major modification and reconstruction of existing equipment. That is, it is particularly desirable to offset the destructive effects of metal contaminants and high Conradson carbon feeds by employing some modified processing parameters rather than effecting major equipment changes. More important is the need to achieve conversion of more of the crude barrel to gasoline and gasoline precursors than obtainable with a more clean gas oil feed as accomplished in existing fluid catalytic cracking (FCC) operations.

Crude oils in the natural state contain a variety of metallo-organic compounds which contribute to undesirable catalyst functions in cracking the heaviest or resid portion of a crude oil. Among these compounds are coke precursors (asphaltenes, poly-nuclear aromatics of at least 5 rings); heavy metals such as iron, nickel, vanadium and copper as free metals, oxides and sulfides or combined as porphyrins in combination with deactivating amounts of sodium, potassium, sulfur and nitrogen materials. Materials such as high boiling asphaltenes tend to break down into coke during the cracking operation which deposits on the catalyst as carbonaceous or hydrocarbonaceous material thereby inactivating the catalyst cracking activity and particularly its selectivity. Metal deposits further contribute to this inactivation of catalyst particles beyond simple restoration techniques and such metals deposition can cause terminal deactivation of a crystalline zeolite structure employed in a cracking catalyst. It has been determined that the heavy metals

RI-6181A

transfer almost quantitively from the feed stock to a catalyst particle surface.

Numerous proposals are provided in the prior art for upgrading poor quality residual oil feeds to obtain desired gasoline products. These proposals include the combination of one or more of vacuum distillation solvent extraction, hydrotreating, thermal visbreaking in combination with catalytic cracking and combinations thereof, all of which are criticized as economically unattractive for processing high cost crude oil and particularly that of poor quality.

A number of patents in the prior art disclose the concept of passivating metal contaminants of nickel, vanadium, copper and iron by the addition of metals and compounds thereof selected from the group of magnesium, calcium, stontium, barium, scandium, titanium, chromium, molybdenium, manganese, cobalt, antimony, zinc, cadmium, zirconium, tin, lead and rare earth metals, all of which may or may not contribute to altering product selectivity in a fluid catalytic cracking operation.

It is clear from the above that innovative if not dramatic processing contributions are desperately needed at this stage of the petroleum refining industry. The present invention is directed to a new and novel combination of fluid catalytic cracking processing restrictions and operating parameters which amount to a giant step forward in the catalytic conversion of reduced crudes to gasoline, gasoline precursors and higher boiling liquids and reducing problems associated with the

RI-6181A

production of gasoline, fuel oils and gasoline precursors from poor quality crudes.

The present invention further addressed itself to obtaining an efficient and economically attractive heat balanced operation for upgrading poor quality crude oils comprising residual portions of crude oils including atmospheric gas oils and higher boiling portions thereof known as vacuum gas oils and vacuum resid boiling above about 551.6°C (1025°F) to produce gasoline and other useful products. The present invention is also directed to a combination of operating parameters by which the catalyst operating life is retained for an extended on-stream life during conversion of poor quality residual oils comprising components boiling above 551.6°C (1025°F).

## Summary of the Invention

The present invention is concerned with effecting a selective catalytic conversion of crude oils and particularly gas oils comprising the higher boiling portions of crude oils referred to as black oils such as included in topped crudes, residual oils and reduced crudes comprising metal contaminants of nickel, vanadium, iron and copper as well as Conradson carbon producing components boiling above vacuum gas oils and particularly boiling above 551.6°C (1025°F). More particularly, the present invention is concerned with a relationship of operating or processing parameters synergistically compatible with utilizing a special low coke producing cracking catalyst composition under conditions providing selective catalytic cracking of residual oils

RI-6181A

simultaneously with passivation of metal contaminants, in combination with a controlled catalyst regeneration operation contributing particularly to a heat balanced operation. The particular combination of operating parameters herein identified contribute to providing relatively high yields of light fuel oils, gasoline and gasoline precursor products from poor quality crude oil residual feeds. In yet another aspect the present invention is concerned with a novel approach to maintaining a heat balanced operation in the combination of catalyst regeneration and a selective catalytic cracking of residual oils such as topped and reduced crudes.

## Discussion of Specific Embodiments

In a more particular aspect the present invention is concerned with a selective catalytic cracking of residual oils comprising hydrotreated oils boiling below 551.6°C (1025°F) in the presence of a special catalyst composition generally referred to as a low coke producing catalyst and comprising an ammonia exchanged faujasite crystalline aluminosilicate prepared under conditions to produce a stable hydrogen "Y" crystalline zeolite.

## Catalysts:

The low coke producing catalysts employed in the process of this invention are prepared to encompass one or more rare earth metals less than 2 weight percent in the crystalline zeolite or as part of the total catalyst composition comprising in one embodiment within

RI-6181A

the inorganic oxide comprising matrix material. The inorganic oxide matrix material is preferably an acidic matrix material comprising a siliceous component in combination with clay-type materials providing an abundance of alumina. That is to say, the catalyst composition is prepared to comprise initially at least 40 weight percent of alumina, in combination with from 10 to about 15 weight percent of stable hydrogen form of "Y" faujasite crystalline zeolite dispersed in the inorganic oxide matrix material. Other criteria important to the catalyst physical characteristics is the employment of a preparation technique to provide a high surface area matrix comprising a pore volume of at least 0.3 cc/g. It is preferred that the surface area of the catalyst initially prepared be sufficiently high to provide an equilibrium catalyst surface area greater than 100 sq. m/g.

Catalyst preparation techniques associated with providing the special catalyst compositions utilized in this invention may be derived from the teachings of the following U.S. Patents, the subject matter of which is incorporated herein by reference thereto. The patents include U.S. Patents 4,058,484 Alafandi et al; 4,142,995 Alafandi et al; 4,237,031 Alafandi et al; 4,238,360 Alafandi et al; 4,246,138 Alafandi et al; 4,310,441 Alafandi et al; 4,325,845 Lim et al; and 4,325,847 Lim et al.

Analysis of some prepared catalyst compositions particularly suitable for use in the processing concepts of this invention are as follows:

RI-6181A

## Table

| Elemental Compositions, Wt. % I.B. | Catalyst A | Catalyst B |
|---|---|---|
| Si02 | 44.5 | 45.6 |
| A1203 | 48.7 | 47.4 |
| Ti02 | 1.27 | 1.67 |
| Fe203 | 0.54 | 0.71 |
| Na20 | 0.87 | 0.73 |
| La203 | 1.12 | 1.00 |
| Ce02 | 0.43 | 0.31 |
| Nd203 (calculated) | 0.45 | 0.36 |
| Pr6011 (calculated) | 0.15 | 0.13 |
| Re203 total | 2.15 | 1.80 |
| La203/Ce02 | 2.60 | 3.20 |

## Phase Composition Wt. % I.B.

| Zeolite Type | "Y" Faujasite | "Y" Faujasite |
|---|---|---|
| XRD% Intern. Std. | 10 | 8 |
| Kaolinite | 61 | 56 |
| Metakaolinite/Mullite Spinel | 23 | 26 |
| Bayerite/Amorp. Al(OH)$_3$ | 5 | 6 |

## Phase Composition Wt. % I.B.

| | | |
|---|---|---|
| Pseudo bochmite | 17 | 11 |
| Anatase (Ti02) | 2 | 2 |

RI-6181A

Hg Pore Size Distribution (%)

| | | |
|---|---|---|
| 6000-1000 Angstroms | 12 | 20 |
| 1000-400 Angstroms | 23 | 24 |
| 400-200 Angstroms | 17 | 14 |
| 200-100 Angstroms | 13 | 11 |
| 100-80 Angstroms | 5 | 5 |
| 80-60 Angstroms | 9 | 8 |
| <60 Angstroms | 22 | 18 |

It will be observed from the above analysis that a high silica to alumina content catalysts comprising a stable hydrogen form of crystalline faujasite "Y" zeolite comprising rare earths. Not more than about 15 wt% of the special zeolite is included in the catalyst compositions. These catalyst compositions are shown to contain substantial titanium oxide as well as rare earth metals rich in lanthanum to provide a La/Ce ratio of at least 1.92. In addition the catalyst compositions are prepared to provide greater than about 0.44/g. pore volume and comprise a pore size distribution greater that 400 Angstroms of at least 35 percent and a pore size distribution greater than 200 Angstroms of at least 50 percent. The zeolite component of the catalyst may be prepared from a mixture of hydrogen stable faujasite zeolite and a rare earth exchanged faujasite zeolite or the rare earth components of the catalyst may be added during catalyst preparation to the hydrogen stable zeolite before or after distribution in an inorganic matrix material comprising the aluminas above identified. Although not particularly identified in the above table, the catalyst compositions are prepared to provide an initial surface area of at least 200 sq. m/g. so that use of the catalyst as herein described will

RI-6181A

provide a catalyst equilibirum surface area of at least 100 sq. m/g. during accumulation of metal contaminants up to about 8000 ppm Ni + V.

The low coke producing faujasite crystalline zeolite catalyst above identified is prepared in a fluidizable particle size within the range of 20 to 100 microns providing an average particle size in the range of 70 to 80 microns. The catalyst is heated in a regeneration zone to an elevated temperature within the range of about 676.6°C (1250°F) up to about 732.2°C (1350°F) but preferably not above about 726.6°C (1340°F) as hereinafter discussed.

Cracking:

The thus heated catalyst is brought in intimate contact with a residual oil feed containing vacuum resid to be cracked under conditions to form a suspension thereof in a riser cracking zone permitting maintenance of a contact time within the riser less than about 8 seconds, but preferably not more than about 6 seconds and more usually in the range of 2 to 5 seconds before effecting separation of the formed suspension of catalyst and vaporous products of the cracking operation.

Gasoline Addition:

A significant contributing aspect of the operating concept of this invention relies upon charging a hydrotreated gas oil of reduced sulfur and nitrogen components with vacuum bottoms to form a residual oil feed which is mixed with a recycled gasoline boiling

RI-6181A

0103160

range liquid product of about 226.6°C (440°F) E.P. and recovered from a cracking operation in an amount to act as a dispersing diluent material with the residual oil feed and provide in substantial measure a liquid heat sink for adjusting the hot recovered regenerated catalyst at a temperature up to about 732.2°C or 760.0°C (1350°F or 1400°F) to a more compatible and desired residual oil cracking temperature producing significant improved yields of gasoline boiling range products. In a particular aspect it is preferred that the mixed feed temperature above obtained and charged to the cracking operation be equal to or less than about 204.4°C (400°F) and that the catalyst to oil ratio be at least about 3 on a weight basis and not more than 15 to obtain desired dispersed catalyst phase oil feed and catalyst particles. Use of a gasoline liquid product of the cracking operation comprising $C_7$ hydrocarbons such as that boiling below about 226.6°C (440°F) on an ASTM basis as above identified is particularly beneficial since it is recovered as a liquid product from the main column overhead at a temperature up to about 65.5°C (150°F) and thus is particularly suitable for charging with the feed as a liquid heat sink. Also, it is observed that within the operating parameters of the invention, the recycled gasoline product does not appear to encounter any significant further catalytic conversion and therefore does not embrace some problems associated with charging water as a diluent and dispersant which is immediately converted to high temperature steam upon contact with the hot catalyst paticles and thus requires adequate if not substantial separation equipment in downstream processing equipment.

RI-6181A

## Cracking Temperature:

When employing the catalytic cracking concepts and operating parameters herein identified it is intended to apply process restrictions which permit maintaining a vaporous product-catalyst suspension at the riser discharge limited to within the range of about 510°C (950°F) to about 565.5°C (1050°F), and preferably not above about 537.7°C (1000°F).

A particularly important aspect of the processing concept of the present invention is concerned with feed preparation at least to the extent that substantial sulfur and nitrogen components are removed from a portion of the residual oil feed in a preliminary hydrotreating operation more often referred to as a desulfurization operation. That is to say, the crude oil feed or residual portion thereof is separated to recover a gas oil phase comprising atmospheric and vacuum gas oils from the resid portion thereof and at least the gas oil phase is desulfurized by hydrotreating over a fixed bed of desulfurization catalyst known in the prior art such as a cobalt molybdenum desulfurization catalyst, a nickel tungsten desulfurization catalyst or any other known desulfurization catalyst in the prior art and suitable for the purpose. The hydrotreating-desulfurization conditions are relatively severe, depending on the nitrogen content of the feed and thus will be effected at a temperature within the range of 343.3°C (650°F) to 426.6°C (800°F) at a pressure within the range of 600 to 700 psig. Hydrogen suitable for the process may be recovered from the products of

RI-6181A

catalytic reforming and/or in combination with hydrogen from a hydrogen producing plant.

The gas oil boiling range portion of the crude oil thus hydrogenated is then blended or mixed with the resid portion of the crude oil and thereafter the mixture is subjected to the special fluid catalytic cracking operation of this invention as herein provided.

Separation/Stripping:

Catalyst particles are separated from vaporous hydrocarbon product of catalytic conversion by any one of a number of different techniques known in the prior art. The separated catalyst is passed to a stripping zone for removal of entrained vapors or vaporous material such as by counter-current contact at an elevated temperature up to about 537.7°C (1000°F) with a stripping gas such as steam or other suitable material including carbon dioxide. The stripped catalyst is then passed to a catalyst regeneration operation wherein deposited carbonaceous material sometimes referred to as hydrocarbonaceous material is removed by combustion with an oxygen containing gas such as air or other suitable and appropriate gas comprising oxygen.

Regeneration:

Regeneration of the catalyst particles comprising hydrocarbonaceous deposits of residual oil cracking pursuant to achieving a more heat balanced operation and thus a more economically efficient operation under restricted oxygen deficient oxidizing

RI-6181A

conditions is accomplished under restricted combustion temperature conditions controlled in substantial, measure by the amount of (CO), carbon monoxide combustion effected within a dense fluid bed of the catalyst being regenerated with or without the presence of a carbon monoxide combustion promoter and consistent with retaining some limited residual carbon up to about 0.25 weight percent on regenerated catalyst particles. CO combustion promoters suitable for use in the regeneration operation of this invention may be one or more metals selected from the group consisting of Pt, Pd, Rh, Ru, Ir, Os and Re added in a very small amount generally less than about 10 ppm. The addition of a CO combustion metal promoter causes a dramatic change in the temperature encountered in the dense catalyst bed regeneration operation and control of the thus promoted temperature differential is of particular importance in maintaining the heat balance of the restricted regeneration operation of this invention. Under limited or restricted oxidizing conditions such as an oxygen deficient atmosphere during the catalyst regeneration operation is believed to also alter substantially the state of oxidation of metal contaminants and added metals. More particularly, the regneration operation of this invention is effected within operating parameters of air feed rate and a CO combustion promoter particularly selected to restrict the combustion temperature encountered to below about 760.0°C (1400°F) or 732.2°C (1350°F) and particularly avoid dispersed catalyst phase after burning of CO. A further restriction desired is to retain sufficient residual carbon on the catalyst particles not to exceed about 0.25 but include at least about 0.1 weight percent thereof. Thus, the selective regeneration technique of the

RI-6181A

invention by virtue of limited oxygen partial pressure maximized in the area of regenerated catalyst withdrawal and CO combustion restrictions herein identified is considered to be a mild if not a nonoxidizing mode to the extent that at least deposited metal contaminants are substantially retained in a form other than a high state of oxidization so that nickel for example will be in a form more easily passivated and/or deactivated by the addition of antimony and/or other metal combined therewith.

Passivating Metals:

A further important aspect of the process combination of this invention relates to the addition of one or more contaminant metal passivating agents of a composition which is readily dispersed with the fluid catalyst particles to provide contact with metal contaminants on the catalyst particles. One or metals and/or compounds thereof which are readily reducible in the combination operation of this invention and suitable to passivate deposits of nickel, vanadium, iron and copper as well as promote controlled CO combustion may be selected from the group consisting of magnesium, calcium, strontium, barium, aluminum, scandium, titanium, chromium, molybdenum, manganese, cobalt, antimony, zinc, cadmium, tin, lead, rare earth metals, ruthenium, rhodium, palladium, osmium, iridium, platinum, rhenium and mixtures thereof. The catalyst composition of the invention particularly includes a stable form of hydrogen crystalline aluminosilicate or hydrogen "Y" crystalline zeolite dispersed in an acidic inorganic oxide matrix composition of silica and alumina preferably of a high

RI-6181A

alumina content as discussed above and promoted with a combination of suitable metal components that promote a controlled CO combustion in an oxygen limited atmosphere and contaminant metals passivation during accumulation thereof on the high surface area, high pore volume catalyst compositions herein identified.

The one or more metal components added as herein provided to passivate metal contaminants and promote CO combustion may be dispersed in substantially any very fine form with the feed or catalyst particles circulated in the system. It is preferred to employ a colloidal compound of antimony or other passivating metal that is more easily finely dispersed with the fluid catalyst particles so that added materials will rapidly form passivated mixtures with deposited metal contaminants comprising V and nickel in the regeneration operation. Conversion of a residual oil hydrocarbon feed with the fluid catalyst particles of this invention is preferably effected in a riser hydrocarbon conversion zone or operation. In yet another aspect, the low coke producing catalyst herein identified and preferred in the cracking process of this invention may also particularly comprise some titanium added during catalyst preparation and/or added during use in the cracking operation. It is theorized that the presence of titanium contributes to the availability of acid cracking sites by the mechanism discussed in copending application, serial number 06/277751, filed 3/30/81, and copending application, serial number 06/263395, filed 5/13/81, the subject matter of which is incorporated herein by reference thereto.

RI-6181A

It is important in achieving the contributing synergistic operation of this invention to maintain the lower oxide forms of vanadium which melt at a temperature generally above 760.0°C (1400°F). Limiting the oxidizing conditions encountered in the catalyst regeneration operation as herein defined is believed to substantially restrict undesired excess vanadium oxidization so that it is preferentially adsorbed in or with the alumina component of the catalyst matrix rather than deactivating active zeolite cracking sites. It is preferred that the addition of a compound of antimony or other passivating metal be of a relatively low order of magnitude of about 0.1 pound per 1000 ppm of deposited nickel when accumulating nickel up to about 3500 ppm, when restricting the accumulation of vanadium to not more than 6000 ppm and when accumulating the combination of nickel plus vanadium up to about 8500 ppm. It is further preferred that the level of accumulated metals of nickel plus vanadium on the catalyst herein identified be restricted to not more than about 7000 ppm. To maintain a predetermined and desired metals level on the catalyst depending on feed composition, some catalyst will be withdrawn and replaced with a lower metals level catalyst or fresh catalyst of the characteristics herein identified will be added. It has been found that by maintaining the equilibrium catalyst surface area above 100 sq. m/g. as above defined in combination with a high alumina content and pore volume, antimony addition and the presence of titanium in the catalyst effectively substantially minimizes, at the regeneration conditions employed, the undesirable effects of nickel and vanadium during the selective cracking operation herein defined. The low coke producing catalyst herein defined can thus

RI-6181A

be effectively employed to accumulate substantial levels of metal contaminants when converting residual oils and reduced crudes prepared as herein provided to obtain desired light fuel oils and gasoline products in economically attractive yields.

The processing combination herein defined is thus directed to a very special relationship in operating parameters in conjunction with utilizing a special zeolite catalyst herein identified to effect catalytic upgrading of feeds comprising heavy black oils known as residual oils and reduced crudes. The catalytic cracking operation of this invention may be adapted to substantially any fluid catalytic cracking operation with a minimum of effort and little or no apparatus structural changes. Thus, the relationship of operating parameters to maximize catalyst usage employed and processing restrictions imposed synergistically contribute to one another in achieving a desired heat balance operation when upgrading poor quality crudes in combination with suppressing inherit bad-actor components attributed to metal contaminants and Conradson carbon producing components in the resid portion of crude oil.

## Brief Description of the Drawings

Figure I is a diagrammatic sketch in elevation of a process combination considered conventional comprising a vacuum tower 12, a feed hydrotreater 16 for a gas oil portion of the feed before effecting catalytic cracking thereof.

RI-6181A

Figure II is a diagrammatic sketch in elevation comprising the process steps of figure I modified to include passing vacuum resid with hydrogenated gas oil to the fluid catalytic cracking operation. Provision is also made for adding dispersing diluent as will a metals passivating agent material to the hydrogenated feed charged to the fluid catalytic cracking operation.

## Discussion of Specific Embodiments

## EXAMPLE I

### (Conventional)

A gas oil boiling in the range of about 260°C (500°F) to about 537.7°C (1000°F) is hydrogenated to remove sulfur and nitrogen compounds prior to effecting catalytic cracking thereof with a catalyst composition above defined under condition to provide at the cracking riser reactor outlet a temperature of about 529.4°C (985°F). A product distribution of the following composition is obtained.

| Product | % Yield |
|---|---|
| Gas | 250 MSCFB |
| Gasoline | 65 |
| LCO | 17 |
| Slurry | 6 |
| $C_3$ | 10 |
| $C_4$ | 10 |
| Coke | 4.68 |
| Liquid Recovery % | 108 |

RI-6181A

## EXAMPLE II

(Conventional Processing with Vacuum Bottoms)

A residual oil feed comprising hydrogenated gas oils of end boiling point of about 537.7°C (1000°F) is admixed with 12% of vacuum bottoms boiling above 537.7°C (1000°F). The residual oil feed comprises 16,133 bbl/D hydrogenated gas oil mixed with 2200 bbl/D of the vacuum bottoms. The feed is cracked with a catalyst similar to that used in example and under similar reaction conditions. The cracking operation is completed absent metals passivation.

| Product | Units | Ex II Yields | % | Ex I Yields | % | Δ Ex II - Ex I Yield | % Change |
|---|---|---|---|---|---|---|---|
| Gas | MSCFD | 5843 | - | 4083 | - | 1760 | - |
| Gasoline | B/D | 11036 | 60.2 | 10486 | 65.0 | 550 | 20 |
| LCO | B/D | 3843 | 21.0 | 2743 | 17.0 | 1100 | 50 |
| Slurry | B/D | 1293 | 7.1 | 968 | 6.0 | 330 | 15 |
| C$_3$ | B/D | 1613 | 8.8 | 1613 | 10.0 | 0 | 0 |
| C$_4$ | B/D | 1613 | 8.8 | 1613 | 10.0 | 0 | 0 |
| Coke | B/D | 345792 | 6.0 | 232547 | 4.68 | 113245 | 14.5 |

## EXAMPLE III

(Invention-Vac Tower Bottoms, Metal Passivation)

In this example, Example II was repeated with the addition to the feed providing about 3 ppm by weight of antimony. An antimony oxide was employed to passivate metal contaminant deposits on the catalyst. The amount

RI-6181A

of antimony provided may be selected from within the
range of 1 to 8 ppm by weight.

| Product | Units | Example III Yields | % | Example I Yields | % | Yield | % Change | Relative Value |
|---------|-------|--------|---|--------|---|-------|----------|----------------|
| Gas | MSCFD | 5645 | - | 4083 | - | 1382 | - | 1.0 |
| Gasoline | B/D | 11326 | 61.8 | 10486 | 65.0 | 840 | 38.2 | 1.7 |
| LCO | B/D | 3709 | 20.2 | 2743 | 17.0 | 966 | 43.9 | 1.6 |
| Slurry | B/D | 1201 | 6.5 | 968 | 6.0 | 233 | 10.6 | 1.4 |
| $C_3$ | B/D | 1613 | 8.8 | 1613 | 10.0 | 0 | 0.0 | 1.1 |
| $C_4$ | B/D | 1613 | 8.8 | 1613 | 10.0 | 0 | 0.0 | 1.2 |
| Coke | B/D | 339241 | 5.9 | 232547 | 4.68 | 0 | 13.7 | 0.5 |

It will be observed upon examination of the
data of Example II that a delta ( $\Delta$ ) yield change
attributable to the vacuum bottoms portion of the feed is
considerable even in the absence of passivating metal
deposits. That is, there is a yield improvement in
gasoline and light cycle oil (LCO) as shown under the
heading  yield when comparing the yields obtained by
Example II and Example I. Even though there is
substantially more coke make it is more significant to
note that the yield of $C_3$ and $C_4$ hydrocarbons was not
increased.

The product yield distribution change of
Example III is much more dramatic when comparing the
results obtained during the addition of an antimony
compound to passivate metal contaminant deposits with the
results obtained in Example I and/or Example II. That
is, the gasoline yield attributed to vacuum bottoms in
Example III data comparison is much higher than similarly
attributed in Example II. On the other hand and more
significant is the observation that the LCO delta yield

RI-6181A

increase is much less in favor of gasoline production. So also is the yield in slurry oil decreased in this example as well as gas and coke make when compared with the data of Example II.

It is also important to observe and recognize the finding that a relatively low zeolite content catalyst composition of the particular characteristics herein identified can produce such high yields of desired gasoline product from residual portions of crudes treated as herein provided even when achieving substantial metals deactivation levels up to a nickel equivalent metals accumulation level of about 8500 ppm. Thus, a relatively inexpensive catalyst composition because of its restricted zeolite content and composition, is shown to be a most effective residual or black oil conversion catalyst during accumulation of substantial amounts of contaminating metal deposits.

Example IV
(Conventional Operation)

Referring now to figure I, representing a typical commercial operation, there is shown an atmospheric crude tower 1 to which a crude oil feed is introduced by conduit 9. Typically a sweet crude comprising a sulfur content below about 0.6% by weight i.e. Louisiana, Mississippi, Texas sweets and Michigan sweet crudes are charged to the operation. In atmospheric fractionation tower 10 a separation is made permitting the recovery of gaseous material separately from a gasoline boiling range fraction, kerosene, diesel fuel and a heavy atmospheric gas oil (HCO) fraction

RI-6181A

withdrawn by conduit 21 thereby providing a topped or reduced crude fraction withdrawn from the bottom of the tower by conduit 11 and comprising an initial boiling point (IBP) of at least 343.3°C (650°F) or higher depending on crude composition and product slate desired. The reduced crude fraction withdrawn by conduit 11 is then passed to a vacuum distillation tower maintained at a sufficiently reduced pressure of about 30 mm Hg vacuum at a temperature of about 387.7°C (730°F) to permit separation and recovery of a light vacuum gas oil withdrawn by conduit 13 and a heavier vacuum gas oil withdrawn by conduit 14 often referred to as a bulk distillate. In this arrangement, a vacuum resid is recovered from the bottom of vacuum tower 12 for disposal as by blending to produce No. 6 fuel oil. The vacuum gas oils in conduit 13 and 14 are combined and passed by conduit 15 all or in part to to a hydrogenation or hydrotreater zone 16. Portions of vacuum gas oil in conduits 13 and 14 may be sent to other refinery units depending on products desired or themselves utilized as products where appropriately expedient. The hydrotreater 16 is operated under conditions which provide hydrogen uptake sufficient to substantially saturate most olefins contained in the vacuum gas oils charged thereto. The operating conditions of temperature and pressure are preferably selected to minimize significant cracking of ring compounds comprised in the oil feed. In a typical operation, about 80% of the vacuum gas oils in conduit 15 are sent to the hydrotreater with about 20% by weight thereof being passed by bypass conduit 17 for admixture with hydrogenated gas oil product before being charged to catalytic cracking in a riser cracking zone 19. In addition to the above, the atmospheric gas oil in conduit

RI-6181A

21 is admixed with hydrogenated vacuum gas oil or separately charged to the riser cracking zone 19 of a typical fluid catalytic cracking process circulating a zeolite cracking catalyst through the riser cracking zone and an adjacent regeneration zone maintained under operating conditions providing high yields of gasoline boiling range products. The product yield and selectivity of example 1 is typical of that obtainable by the above identified operation.

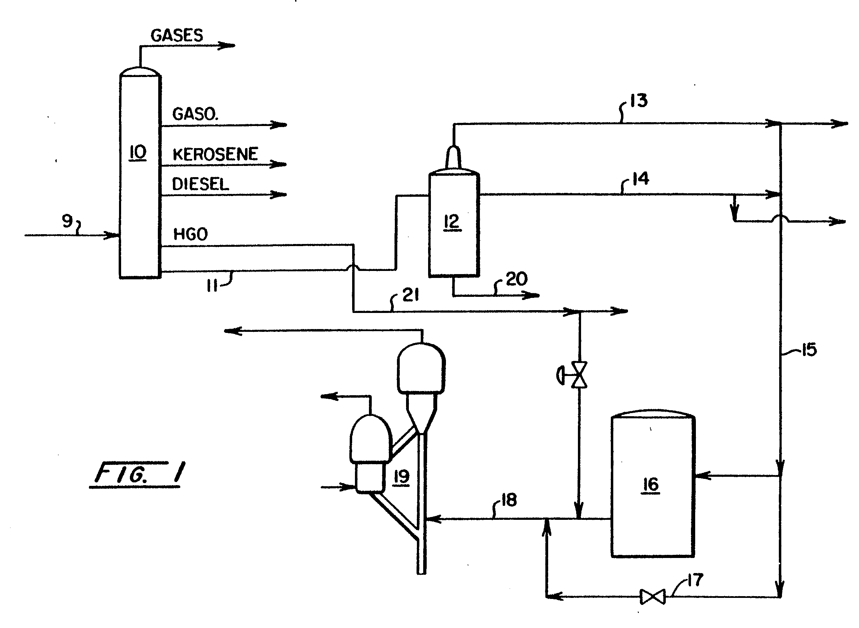

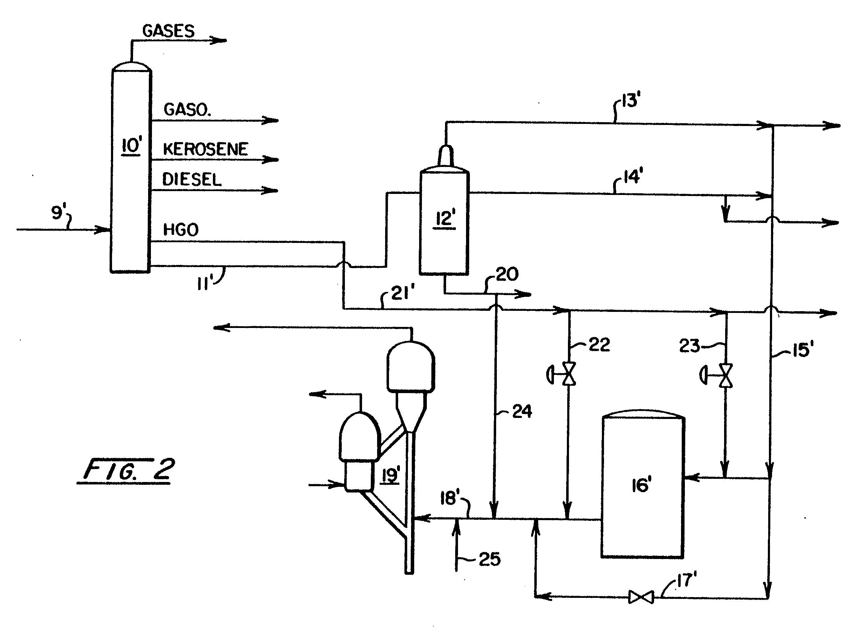

In the processing arrangment of figure 2 and representation of the improved combination operation of the present invention, the processing sequence is similar to that discussed above with respect to figure 1 except for the following variations. That is, in the improved process arrangement of figure 2, the vacuum resid recovered from vacuum distillation zone 12 and recovered by 20' is passed by conduit 24 for admixture with the hydrogenated vacuum gas oil recovered from zone 16 before being charged to the reset cracking zone 19. It is contemplated, in one embodiment, of charging the vacuum resid in conduit 24 separately to the riser cracking zone 19 such as a downstream portion thereof. On the other hand, the heavy atmospheric gas oil fraction recovered by conduit 21 may be passed all or in part by conduit 22 to conduit 18' and thence to the riser cracking zone 19. In another aspect a portion of this gas oil feed in conduit 21 may be passed by conduit 23 for charging to the hydrotreater with the vacuum gas oils in conduit 15. In a more particular aspect, the process combination of figure 2 is particularly implemented when using the special low zeolite content cracking catalyst above discussed in combination with effecting metals

RI-6181A

passivation with the special treating agent herein discussed. Thus there is a significant synergistic contribution attributable to the above combination of operating parameters which reduces substantially the thermal output of a fluid catalytic cracking operation to the extent permitting the addition of up to 17% of vacuum tower bottoms or resid with the gas oil feed charged to fluid cracking by conduit 18. Based on 18,600 barrels per day of feed charged to the FCC permits the addition of 2700 barrel per day of vacuum resid and the manufacture of products disclosed when above in example III.

Having thus generally described the improved cracking process of the present invention and the particular catalyst compositions used therein with advantage and more particularly described specific examples in support thereof, it is to be understood that no undue restrictions are to be imposed by reasons thereof except as defined by the following claims.

RI-6181A

What is claimed is:

1.  In a process for catalytically converting residual oils comprising metallo-organic compound boiling above 552°C (1025°F) with an active zeolite cracking catalyst to which a passivating metals is added to passivate accumulated nickel and catalyst particles comprising carbonaceous deposits are regenerated with an oxygen containing gas to produce a $CO_2$ rich flue gas the improvement which comprises:

    (a)  partially hydrogenating a gas oil product of vacuum distillation before admixture with a vacuum resid;

    (b)  catalytically cracking said hydrogenated gas and resid mixture in the pressure of atmospheric gas oil with a special catalyst defined below;

    (c)  regenerating a special catalyst composition defined below used to catalytically convert said feed mixture comprising partially hydrogenated residual oil and vacuum resid comprising metallo-organic compounds to remove deposited carbonaceous material of cracking to a desired residual coke level in the presence of oxygen containing gas at a temperature restricted to within the range of 677°C (1250°F) up to about 760°C (1400°F);

    (d)  controlling the catalyst regeneration temperature within said limits by controlling CO burning within a dense fluid bed of catalyst being regenerated; and

RI-6181A

(e) employing as said residual oil special cracking catalyst a composition comprising;

 (1) less than 15 weight percent of a stable hydrogen form of faujasite crystalline zeolite,

 (2) an acidic inorganic matrix comprising at least 40 weight percent alumina,

 (3) said catalyst composition prepared under conditions to provide a surface area greater than 200 sq. m/g and a pore volume of at least 0.4 cc/g, and

 (4) said catalyst composition comprising rare earth metals distributed in the catalyst matrix and/or zeolite component providing a rich lanthanum to cerium ratio.

2. The method of Claim 1 wherein the catalyst comprises titanium and wherein nickel deposited on the catalyst during conversion of the residual oil feed mixture is regenerated in an oxygen lean atmosphere in the presence of an added passivating metal compounds which reduces the gas and coke forming properties of the catalyst.

3. The method of Claim 1 wherein regeneration of the catalyst is accomplished in the presence of a CO combustion promoter under conditions to retain residual carbon up to about 0.25 wt% on the catalyst in the presence of an oxygen lean atmosphere

RI-6181A

restricting the oxidation of deposited nickel and vanadium metal contaminants on the catalyst and wherein the low zeolite content hydrogen stable faujasite crystalline zeolite is prepared with the addition of less than 2 weight percent of rare earth metals rich in lanthanum.

4. The method of Claim 1 wherein a controlled CO combustion is effected during catalyst regeneration in the presence of one or more platinum group metal CO combustion promoters and wherein said passivating metal is an antimony compounds partially reduced in the combination of hydrocarbon conversion and oxygen lean catalyst regeneration operation.

5. A method for catalytically cracking a residual oil comprising vacuum bottoms with metallo-organic compounds which comprises:

(a) contacting desulfurized vacuum gas oils mixed with vacuum bottoms and atmospheric gas oil with a low coke producing hydrogen form of crystalline faujasite zeolite catalyst comprising lanthanum and at least 40 weight percent alumina, said contact being effected in the presence of a dispersant material comprising added liquid gasoline boiling range product of cracking and a passivating metal compounds during exposure to temperatures within the range of 510°C (950°F) up to 760°C (1400°F) in said hydrocarbon cracking operation and a subsequent catalyst regeneration operation;

RI-6181A

(b) controlling catalyst temperatures during combustion of deposited carbonaceous material by employing an oxygen lean atmosphere under conditions retaining up to about 0.25 weight percent residual coke on the catalyst; and

(c) restraining the effects of deposited metal contaminants of vanadium and nickel on said product selectivity of cracking by said combination operation whereby the yields of coke and dry gas are substantially reduced in said cracking operation.

6. The method of Claim 5 wherein combustion of CO is confined within a dense fluid bed of the catalyst being regenerated and heat balance of the combination operation is controlled in substantial measure by the catalyst employed, by the amount of CO combustion effected in an oxygen lean atmosphere within the dense fluid bed of catalyst, and by the combination of hydrozinated vacuum gas oil admixed with vacuum resid and atmospheric gas oils.

7. A method for catalytically converting high boiling residual oils comprising nickel and vanadium metallo-organic compounds contributing substantial Conradson carbon deposits during catalytic cracking which comprises:

(a) contacting a partially hydrogenated high boiling oil feed comprising vacuum resid admixed with a liquid gasoline product of a catalytic cracking operation boiling below 227°C (440°F) with a coke selective fluid cracking catalyst at a temperature within the range of 677°C (1250°F) to 732°C (1350°F) for a time less than 8 seconds to produce substantial yields of gasoline and light cycle oil products, said catalyst comprising less than 15 weight percent hydrogen stable faujasite crystalline zeolite dispersed in an acidic inorganic matrix impregnated with rare earths and comprising at least 40 weight percent alumina, said catalyst provided with two or more metal components which passivate metal contaminants in the residual oil feed and promote carbon monoxide combustion;

(b) recovering gasoline product of said cracking operation, regenerating the coke selective catalyst under conditions to retaining some residual carbon on the regenerated catalyst; and

(c) maintaining deposited nickel and vanadium contaminants in a state which minimizes the deactivating effects thereof attributed to promoting the yields of gas, coke and catalyst particle agglomeration.

8. The method of Claim 7 wherein the catalyst comprises titanium and wherein catalyst particles comprising metal contaminants are replaced with fresh catalyst particles at a rate less than 1 pounds per barrel of residual oil feed.

RI-6181A

9.    A method for sustaining the active life of a catalyst employed in the catalytic cracking of oil fractions of vacuum distillation comprising metal contaminants which comprises:

(a)   employing as the catalyst a "Y" faujasite crystalline zeolite mixture of stable hydrogen and rare earth exchanged forms dispersed in an acidic matrix comprising alumina and titanium to effect catalytic cracking of said residual oil feed when dispersed with a gasoline product of the cracking operation to form substantial further yields of gasoline boiling product, effecting said cracking in the presence of added colloidal antimony pentoxide, effecting catalyst regeneration in the presence of a CO combustion metal promoter, and maintaining catalyst particles so used and recovered from said regeneration operation at a temperature not exceeding 732°C (1350°F) during vanadium accumulation up to 6000 ppm.

10.   A method for catalytically upgrading a residual oil comprising metallo-organic compounds to gasoline product which comprises:

(a)   desulfurizing and hydrogenating a vacuum gas oil boiling range portion of said residual oil before admixture with a vacuum resid portion thereof and atmospheric gas oil, catalytically cracking said oil feed mixture under cracking conditons selected to optimize the yield of gasoline boiling range product during limited dispersed phase contact with a catalyst composition comprising a catalytically active ammonia exchanged crystalline zeolite in an amount in the range of 2 to 15 wt% dispersed in an acidic matrix comprising rare earths and at least 40 wt% alumina, said catalyst composition providing substantial pore size distribution of at least 400 Angstroms;

(b) restricting the accumulation of nickel and vanadium on said catalyst composition not to exceed about 7500 ppm during addition of antimony pentoxide; and

(c) recovering a gasoline product of said cracking operation of improved yield attributable substantially to the vacuum resid portion of said residual oil feed.

RI-6181A

FIG. 1

FIG. 2

## DOCUMENTS CONSIDERED TO BE RELEVANT

EP 83107848.0

| Category | Citation of document with indication, where appropriate, of relevant passages | Relevant to claim | CLASSIFICATION OF THE APPLICATION (Int. Cl. ³) |
|---|---|---|---|
| A | GB - A - 2 034 743 (MOBIL OIL CORPORATION) <br><br> * Claims; page 2, line 23 - page 4, line 14 * <br><br> -- | 1,9 | C 10 G 69/04 <br> C 10 G 11/05 <br> //B 01 J 29/08 <br> B 01 J 29/38 |
| A | GB - A - 2 034 350 (CHEVRON RE-SEARCH COMPANY) <br><br> * Claims; page 1, line 5 - page 3, line 21 * <br><br> -- | 1,9 | |
| A | GB - A - 1 570 682 (GULF RESEARCH & DEVELOPMENT COMPANY) <br><br> * Claims; page 1, line 13 - page 4, line 36 * <br><br> -- | 1,9,10 | |
| A | GB - A - 1 564 298 (GULF RESEARCH & DEVELOPMENT COMPANY) <br><br> * Claims; page 1, line 14 - page 4, line 41 * <br><br> -- | 1,9,10 | **TECHNICAL FIELDS SEARCHED (Int. Cl. ³)** <br><br> C 10 G 11/00 <br> C 10 G 69/00 <br> C 10 G 47/00 |
| A | US - A - 4 299 688 (TU et al.) <br><br> * Claims; column 2, line 48 - column 7, line 50 * <br><br> -- | 1,9 | |
| A | US - A - 4 292 169 (GLADROW) <br><br> * Claims; column 2, line 30 - column 6, line 34 * <br><br> -- | 1,9 | |

The present search report has been drawn up for all claims

| Place of search | Date of completion of the search | Examiner |
|---|---|---|
| VIENNA | 07-12-1983 | STÖCKLMAYER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82

| Category | Citation of document with indication, where appropriate, of relevant passages | Relevant to claim |
|---|---|---|
| | **DOCUMENTS CONSIDERED TO BE RELEVANT** | |
| A | US - A - 4 272 358 (BARON) <br> * Claims; column 2, line 45 - column 6, line 14 * <br> ---- | 1 |

CLASSIFICATION OF THE APPLICATION (Int. Cl.³)

TECHNICAL FIELDS SEARCHED (Int. Cl.³)